(19) Europäisches Patentamt
European Patent Office
Office européen des brevets

(11) Veröffentlichungsnummer : **0 225 847 B1**

(12) # EUROPÄISCHE PATENTSCHRIFT

(45) Veröffentlichungstag der Patentschrift : **16.01.91 Patentblatt 91/03**

(51) Int. Cl.$^5$ : **C09D 7/12**, C08K 5/00, // (C08K5/00, 5:13, 5:16, 5:10, 5:34)

(21) Anmeldenummer : **86810544.6**

(22) Anmeldetag : **26.11.86**

(54) **Ein Triazol enthaltende säure-härtbare Einbrennlacke.**

(30) Priorität : **02.12.85 US 803683**

(43) Veröffentlichungstag der Anmeldung : **16.06.87 Patentblatt 87/25**

(45) Bekanntmachung des Hinweises auf die Patenterteilung : **16.01.91 Patentblatt 91/03**

(84) Benannte Vertragsstaaten : **BE DE ES FR GB IT**

(56) Entgegenhaltungen : **EP-A- 0 055 216**

(73) Patentinhaber : **CIBA-GEIGY AG**
**Klybeckstrasse 141**
**CH-4002 Basel (CH)**

(72) Erfinder : **Dexter, Martin**
**416 Cedar Drive West**
**Briarcliff Manor New York 10510 (US)**
Erfinder : **Behrens, Rudolf A.**
**P.O. Box 8213**
**New Fairfield Connecticut 06812 (US)**

EP 0 225 847 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft die Stabilisierung von säure-katalysierten Einbrennlacken, die während ihrer Herstellung oder Anwendung in Kontakt mit Kupfer kommen.

Die Verwendung von Benztriazol oder Tolutriazol als Korrosionsinhibitoren für Kupfer und reine Legierungen ist bekannt. Man verhindert damit die Korrosion von Gegenständen aus Kupfer bei ihrer Herstellung und ihrer Lagerung.

Benztriazol wurde auch zur Verlängerung der Gebrauchsdauer von Lacken auf Basis von Polyurethanen und thermoplastischen Acrylharzen auf Kupfer-Substraten verwendet. Solche Lacke sind in der Aussenanwendung 3-5 Jahre beständig. Vergilbung und andere Abbauerscheinungen zeigen sich erst nach längerer Zeit, siehe J.R.A. Christie et al., Trans. Inst. Metal Finishes 50, 19 (1972).

Lacke auf Basis von Polyurethanen und thermoplastischen Acrylharzen werden nicht nachteilig beeinflusst, wenn bei ihrer Herstellung Apparaturen mit Teilen aus Kupfer oder Kupferlegierungen verwendet werden. Sie werden nicht mit Kupfer verunreinigt, wenn sie mit Kupfer enthaltenden Rohren, Sprühdüsen oder anderen Apparaturen in Berührung kommen. Enthalten diese Lacke 2-Hydroxybenzophenone oder 2-Hydroxyphenylbenztriazole als UV-Stabilisatoren, so treten keine durch Kupfer bedingten Verfärbungen auf. Wie Christie et al. ausführen werden solche Lacke jedoch schneller abgebaut, wenn sie auf Kupfer oder Bronze aufgebracht sind. Durch witterungsbedingte Korrosion des Metalls entstehen Kupferverbindungen, die im Lack löslich sind, die Alterung des Lackes beschleunigen und Verfärbungen verursachen.

Im Gegensatz zum Verhalten von Lacken auf Basis von thermoplastischen Acrylharzen und Polyurethanen greifen thermohärtbare Acrylharz-Einbrennlacke und andere Lacke, die saure Katalysatoren enthalten, Kupfer- und Kupfer-Legierungen an und werden mit Kupferionen verunreinigt. Dies kann während der Bereitung des Lackes geschehen oder während der Applikation, durch Kontakt mit Kupfer enthaltenden Rohren, Rührwerken, Sprühdüsen oder anderen Apparateteilen. Solcher Art verunreinigte Lacke sind von Anfang an verfärbt und haben eine verminderte Lichtbeständigkeit. Anstriche aus solchen Lacken tendieren zu Glanzverlust und Rissbildung eher als Anstriche, die nicht mit Kupfer in Kontakt kommen. Der Zusatz von 2-Hydroxybenzophenonen und 2-Hydroxyphenylbenztriazolen als Lichtschutzmittel zu solchen mit Kupfer verunreinigten Lacken resultiert in einer sofortigen Verfärbung. Es wurde gefunden, dass der Zusatz von Benztriazol, substituierten Benztriazolen oder 1,2,4-Triazolen und deren Derivaten die Verunreinigung solcher sauer katalysierten Einbrennlacke herabsetzt und die Farbe und Beständigkeit der Anstriche verbessert.

Sauer härtbare Einbrennlacke gewinnen gegenüber Lacken auf Basis thermoplastischer Acrylharze zunehmende Bedeutung. Die Gründe hierfür sind einmal die geringere Menge an Lösungsmittel, die für die Applikation von Einbrennlacken benötigt ist (Umweltschutz) und ihre höhere Widerstandsfestigkeit gegen Lösungsmittel, was vor allem für Automobil-Lacke wichtig ist.

Die vorliegende Erfindung basiert auf der Entdeckung, dass die Zugabe von 0,01 bis 1 % eines Triazols zu einem sauer katalysierten Einbrennlack dessen durch Kupfer oder Kupfer-Ionen bedingte Verfärbung und Herabsetzung der Lichtbeständigkeit verhindert. Beispiele für Triazole, die in diesen geringen Zusatzmengen einen solchen Effekt bewirken, sind Benztriazol, Tolutriazol oder 1,2,4-Triazole.

Die vorliegende Erfindung betrifft daher einen säure-katalysierten Einbrennlack, der gegen Verfärbung, Abbau und Lichtempfindlichkeit bei Kontakt mit Kupfer oder Kupferlegierungen stabilisiert ist, und der folgende Bestandteile enthält :

(a) ein säure-härtbares heissvernetzbares Harz,

(b) einen sauren Härtungskatalysator,

(c) einen UV-Absorber aus der Klasse der 2-Hydroxybenzophenone, der 2-(2-Hydroxyphenyl)-2-H-benztriazole, der Oxalanilide oder der Cyanacrylsäureester und

(d) ein Kupfer komplexierendes Triazol, ausgewählt aus Benztriazol, Tolutriazol oder einem 1,2,4-Triazol.

Die Komponente (a) ist ein Harz, wie es als Bindemittel für Einbrennlacke üblich ist. Hierzu gehören in erster Linie Melamin-Acrylharze, Melamin-Polyesterharze und Melamin-Alkylharze. Diese werden oft mit anderen Harzen, Weichmachern und/oder Extendern verschnitten um die Eigenschaften des Polymeren zu modifizieren. Das Harz kann aber auch frei von Melaminharz sein, wie das der Fall ist bei säurehärtbaren Polyester- oder Acrylharzen oder acrylierten Polyester- oder Alkydharzen. Eine nähere Beschreibung der für Lacke verwendeten Acryl-, Polyester- und Alkydharze findet sich in Wagner, Sarx, "Lackkunstharze", München 1971, Seiten 86-123 und 229-238 oder in Ullmann "Enzyclopedie der technischen Chemie", 4. Auflage, Band 15 (1978), Seiten 613-628.

Saure Katalyse ist insbesondere für die Härtung solcher Harze von Bedeutung, die veretherte Aminoharze enthalten, wie z.B. N-Methoxymethyl- oder N-Butoxymethylmelaminharze oder methylierte bzw. butylierte Glykolurilharze.

Solche säure-katalaysierten heissvernetzbaren Harze sind unter den verschiedensten Handelsnamen auf dem Markt und werden in zahlreichen Modifikationen für verschiedene spezielle Anwendungen angeboten. Ihnen allen ist gemeinsam, dass sie unter Zusatz einer Säure durch Erwärmen vernetzbar sind.

Beispiele für saure Katalysatoren, die als Komponente (b) geeignet sind, sind starke organische Säuren, wie z.B. Benzolsulfonsäure, p-Toluolsulfonsäure oder andere organische Sulfonsäuren. Solche Säuren bewirken eine Korrosion von Kupfer mit den oben geschilderten unverwünschten Effekten.

Die Komponente (c) wird zum Schutz des Anstriches gegen Schädigung durch UV-Licht zugegeben. Solche UV-Absorber aus den Klassen der 2-Hydroxybenzophenone, 2-Hydroxyphenyl-2H-benztriazole, Cyanacrylate und Oxalanilide sind viel benutzte und im Handel erhältliche Verbindungen. Beispiele sind 2,4-Dihydroxybenzophenon, 2-(2-Hydroxy-3,5-di-tert.amylphenyl)-2H-benztriazol, 2-(2-Hydroxy-3-tert.butyl-methylphenyl)-5-chlor-2H-benztriazol und 2-[2-Hydroxy-3,5-di(α,α-dimethylbenzyl)-phenyl]-2H-benztriazol. Andere Beispiele von UV-Absorbern, wie sie erfindungsgemäss als Komponente (c) verwendbar sind, werden in Kirk-Othmer, "Encyclopedia of Chemical Technology" Vol. 23, 3. Auflage, J. Wiley 1983, auf Seite 622-623 aufgeführt. Diese Verbindungen führen in Gegenwart von Kupferionen zu Verfärbungen des Anstriches.

Die Triazole der Komponente (d) sind ausgewählt aus Benztriazol Tolutriazol und 1,2,4-Triazolen, Das im Handel erhältliche Tolutriazol ist ein Gemisch der verschiedenen Stellungsisomeren (4-, 5-, 6-, 7-Stellung der $CH_3$-Gruppe). Beispiele für 1,2,4-Triazole sind die 1-(N-Dialkylaminomethyl)-1,2,4-triazole der Formel

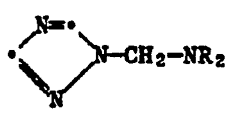

worin R z.B. 2-Ethylhexyl oder n-Octyl ist.

Die Verbindungen der Komponente (d) werden in einer Menge von 0,01 bis 1 Gew.%, vorzugsweise 0,01 bis 0,1 Gew.-%, bezogen auf Komponente (a), dem Lack zugesetzt.

Ausser den Komponenten (a) bis (d) kann der Lack noch andere Bestandteile enthalten, wie sie in der Technologie der Lacke üblich sind. Beispiele hierfür sind Pigmente, Füllstoffe, Lösungsmittel, Verlaufhilfsmittel, Dispergiermittel oder Haftverbesserer. Von besonderer Bedeutung ist die Erfindung für unpigmentierte Klarlacke, wie sie z.B. als Decklack bei Zweischicht-Automobillackierungen verwendet werden.

Die folgenden Beispiele zeigen im Detail die Anwendung der Erfindung und zeigen die Wirkung, die durch den Zusatz der Triazole unter den Bedingungen von beschleunigten Alterungstests erzielt wird.

Beispiele 1 : Jeweils 30 g eines säurekatalysierten heissvernetzbaren Melamin-Acrylharz-Lackes (DCT 1000 der PPG/USA) mit 60 % Feststoffgehalt werden in einer Rollflasche mit einem Bronzeblechstreifen (mit 39 $cm^2$ Oberfläche) in Kontakt gebracht. Vorher werden die in der folgenden Tabelle angegebenen Lichtschutzmittel und Triazole im Lack durch Erwärmen gelöst. Die verschlossenen Flaschen werden 20 Stunden gerollt. Anschliessend wird der Kupfer- und Zinkgehalt des Lackes analysiert.

Der klare Lack wird dann in einer Schichtdicke von etwa 0,04 mm auf weiss lackierte Stahlbleche aufgespritzt und 30 Minuten bei 121°C eingebrannt. Von den Proben wird der Yellowness Index (YI) nach ASTM D 1925-70 bestimmt. Ein YI von 0,6 oder mehr ist nicht mehr akzeptabel.

Folgende Zusätze werden verwendet :

UVA-1 = 2-[2-Hydroxy-3,5-di(α,α-dimethylbenzyl)-phenyl]-2H-benztriazol

BTA = Benztriazol

TTA = Tolutriazol

Die Ergebnisse sind in der folgenden Tabelle 1 aufgeführt. Die prozentuale Angabe der Zusatzmenge bezieht sich dabei auf das feste Lackharz in der Formulierung.

Tabelle 1

| Zusatzmenge UVA-1 | BTA | TTA | YI | Metallgehalt im Lack Cu (ppm) | Zn (ppm) |
|---|---|---|---|---|---|
| - | - | - | - 0,8 | 28 | 8,4 |
| 2 % | - | - | + 0,6 | 23 | 5,6 |
| 2 % | 0,2 % | - | 0,0 | 0 | 0,8 |
| 2 % | 0,1 % | - | + 0,2 | ~ 0 | 1,1 |
| 2 % | 0,05 % | - | - 0,6 | 1,7 | 1,6 |
| 2 % | - | 0,2 % | - 0,1 | 0 | 1,3 |
| 2 % | - | 0,1 % | - 0,3 | 1,2 | 1,7 |
| 2 % | - | 0,05 % | - 0,3 | 2,9 | 2.2 |

Aehnliche Verbesserungen der Farbe werden erreicht, wenn man als UV-Absorber 2-(2-Hydroxy-3,5-di-tert.amylphenyl)-2H-benztriazol, 2-(2-Hydroxy-5-tert.octylphenyl)-2H-benztriazol, 2-Hydroxy-4-dodecyloxybenzophenon oder 2,4-Dihydroxybenzophenon verwendet.

Beispiel 2 : Der im Beispiel 1 verwendete Klarlack wird zusammen mit einer Kupferfolie 96 Stunden bei Raumtemperatur gerührt. Dann wird der Lack auf ein weiss-lackiertes Eisenblech aufgespritzt und die Probe 30 Minuten bei 120°C eingebrannt. Die lackierten Bleche werden in einem QUV-Belichtungsapparat mit UV-Licht bestrahlt und von Zeit zu Zeit wird der 20°-Glanz der Lackoberfläche nach DIN 67530 gemessen sowie das Auftreten von Rissen im Lack visuell beobachtet. Vor dem Test werden im Lack die in der Tabelle 2 aufgeführten Zusätze gelöst.

Tabelle 2

| UVA-1 | BTA | Cu (ppm) | 20°-Glanz (%) nach Belichtungszeit von 0 h | 1200 h | 2000 h | 2800 h | 4400 h |
|---|---|---|---|---|---|---|---|
| - | - | 38 | 89 | 79 | 30 | 0 | - |
| 1 % | - | 36 | 84 | 84 | 79 | 72 | 50 |
| 1 % | 1 % | 4 | 84 | 84 | 80 | 82 | 78 |
| 1 % | 0,05 % | 4 | 86 | 76 | 78 | 84 | 83 |

Daraus ist zu ersehen, dass bereits sehr kleine Mengen an Benztriazol eine markante Stabilisierung des Lackfilmes bewirken.

**Ansprüche**

1. Gegen Verfärbung, Abbau und Lichtempfindlichkeit bei Kontakt mit Kupfer oder einer Kupferlegierung stabilisierter säure-katalysierter Einbrennlack, enthaltend folgende Bestandteile :
(a) ein säure-härtbares heissvernetzbares Harz,
(b) einen sauren Härtungskatalysator,
(c) einen UV-Absorber aus der Klasse der 2-Hydroxybenzophenone, der 2-(2-Hydroxyphenyl)-2-H-benztriazole, der Oxalanilide oder der Cyanacrylsäureester und
(d) ein Kupfer komplexierendes Triazol, ausgewählt aus Benztriazol, Tolutriazol oder einem 1,2,4-Triazol.

2. Einbrennlack gemäss Anspruch 1, worin die Komponente (a) ein Melamin-Acrylharz, Melamin-Polyesterharz oder Melamin-Alkydharz ist.

3. Einbrennlack gemäss Anspruch 1, worin die Komponente (b) p-Toluolsulfonsäure ist.

4. Einbrennlack gemäss Anspruch 1, worin die Komponente (c) ein UV-Absorber aus der Klasse der 2-Hydroxybenzophenone oder der 2-(2-Hydroxyphenyl)-2H-benztriazole ist.

5. Einbrennlack gemäss Anspruch 1, worin die Komponente (d) Benztriazol oder Tolutriazol ist.

6. Einbrennlack gemäss Anspruch 1, worin das Triazol (d) in einer Konzentration von 0,01 bis 1 Gew.-%, bezogen auf die Komponente (a), vorliegt.

7. Verfahren zur Farb- und Abbaustabilisierung von mit Kupfer oder Kupferlegierungen in Kontakt stehenden sauer-katalysierten Einbrennlacken durch Zusatz eines Kupfer-passivierenden Triazols, ausgewählt aus Benztriazol, Tolutriazol oder eines 1,2,4-Triazols.

## Claims

1. A thermosetting, acid-curable enamel coating composition stabilised against discoloration, degradation and light sensitivity resulting from contact with a copper or copper alloy substrate, which comprises:

(a) an acid-curable thermosetting resin,

(b) an acid curing catalyst,

(c) a UV absorber selected from the group consisting of the 2-hydroxybenzophenones, the 2-(2-hydroxyphenyl)-2H-benzotriazoles, the oxanilides and the cyanoacrylates, and

(d) a copper chelating triazole selected from the group consisting of benzotriazole, tolutriazole and 1,2,4-triazole.

2. An enamel coating composition according to claim 1, wherein component (a) is a melamine/acrylic resin, a melamine/polyester resin or a melamine/alkyd resin.

3. An enamel coating composition according to claim 1, wherein component (b) is p-toluenesulfonic acid.

4. An enamel coating composition according to claim 1, wherein component (c) is a UV absorber selected from the class of the 2-hydroxybenzophenones or 2-(2-hydroxyphenyl)-2H-benzotriazoles.

5. An enamel coating composition according to claim 1, wherein component (d) is benztriazole or tolutriazole.

6. An enamel coating composition according to claim 1, which contains the triazole (d) in a concentration of 0.01 to 1 % by weight, based on component (a).

7. A method of stabilising acid-curable enamel coating compositions against discoloration and degradation caused by contact of said enamels with copper or copper alloys, which comprises adding to said enamels a copper-passivating triazole selected from the group consisting of benzotriazole, tolutriazole and 1,2,4-triazole.

## Revendications

1. Vernis à cuire catalysé par un acide et stabilisé contre l'altération de couleur, la dégradation et la sensibilité à la lumière lors d'un contact avec du cuivre ou un alliage de cuivre, vernis qui a les constituants suivants :

(a) une résine thermoréticulable et durcissable par un acide,

(b) un catalyseur de durcissement acide

(c) un absorbeur de rayons ultraviolets de la catégorie des hydroxy-2 benzophénones, des (hydroxy-2 phényl)-2 2H-benzotriazoles, des oxalanilides ou des esters de l'acide cyanacrylique, et

(d) un triazole capable de complexer le cuivre, pris dans l'ensemble constitué par le benzotriazole, le tolutriazole et des triazoles-1,2,4.

2. Vernis à cuire selon la revendication 1 dans lequel la composante (a) est une résine mélamineacrylique, une résine mélamine-polyester ou une résine mélamine-alkyde.

3. Vernis à cuire selon la revendication 1 dans lequel la composante (b) est l'acide p-toluène-sulfonique.

4. Vernis à cuire selon la revendication 1 dans lequel la composante (c) est un absorbeur de rayons ultraviolets de la catégorie des hydroxy-2 benzophénones ou des (hydroxy-2 phényl)-2 2H-benzotriazoles.

5. Vernis à cuire selon la revendication 1 dans lequel la composante (d) est le benzotriazole ou le tolutriazole.

6. Vernis à cuire selon la revendication 1 dans lequel le triazole (d) se trouve à une concentration de 0,01 à 1 % en poids par rapport à la composante (a).

7. Procédé pour stabiliser contre l'altération de couleur et contre la dégradation des vernis à cuire catalysés par des acides et en contact avec du cuivre ou des alliages de cuivre, par addition d'un triazole passivant du cuivre pris dans l'ensemble constitué par le benzotriazole, le tolutriazole et des triazoles-1,2,4.